## Europäisches Patentamt

## European Patent Office

## Office européen des brevets

(19)

(11) Veröffentlichungsnummer: **0 025 479**
**B1**

(12)

# EUROPÄISCHE PATENTSCHRIFT

(45) Veröffentlichungstag der Patentschrift:
**16.05.84**

(21) Anmeldenummer: **80103645.0**

(22) Anmeldetag: **27.06.80**

(51) Int. Cl.³: **A 22 C 13/02**, A 22 C 13/00

(54) **Verfahren und Vorrichtung zur Bildung eines Endverschlusses an einem raupenförmig gerafften Stück Schlauchmaterial, insbesondere Kunstdarm für die Wurstherstellung.**

(30) Priorität: **30.06.79 DE 2926543**

(43) Veröffentlichungstag der Anmeldung:
**25.03.81 Patentblatt 81/12**

(45) Bekanntmachung des Hinweises auf die Patenterteilung:
**16.05.84 Patentblatt 84/20**

(84) Benannte Vertragsstaaten:
**AT BE CH FR GB IT LI NL SE**

(56) Entgegenhaltungen:
**DE - A - 2 719 717**
**FR - A - 1 425 014**
**FR - A - 1 470 243**
**FR - A - 2 179 915**
**US - A - 3 162 893**

(73) Patentinhaber: **Kollross, Günter, Am Wallerstädter Weg 20, D-6080 Gross Gerau-Dornheim (DE)**

(72) Erfinder: **Kollross, Günter, Am Wallerstädter Weg 20, D-6080 Gross Gerau-Dornheim (DE)**

(74) Vertreter: **Beyer, Werner, Dipl.Ing., Patentanwälte Dipl.-Ing. W. Beyer Dipl.-Wirtsch.-Ing. B. Jochem Staufenstrasse 36 Postfach 174109, D-6000 Frankfurt / Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Verfahren und Vorrichtung zum Bilden eines Endverschlusses an einem raupenförmig gerafften Stück Schlauchmaterial, insbesondere Kunstdarm für die Wurstherstellung**

Die Erfindung betrifft ein Verfahren zum Bilden eines Endverschlusses an einem raupenförmig gerafften Stück Schlauchmaterial, insbesondere Kunstdarm für die Wurstherstellung, durch Abdrehen eines die letzten Falten der Schlauchraupe bildenden Materialabschnitts, bei dem ein sich koaxial zur Raupe erstreckendes Werkzeug mit geringerer Radialerstreckung als der äußere Raupenumfang von außen gegen die letzten Falten der Raupe gepreßt und bezüglich dieser verdreht wird, sowie eine Vorrichtung zum Durchführen eines solchen Verfahrens.

Schlauchraupen der vorgenannten Art werden in großem Umfang vor allem bei der Wurstherstellung auf Füllautomaten verwendet. Durch die raupenförmige Verkürzung auf wenige Dezimeter lassen sich Schlauchlängen von bis zu 50 m und mehr auf einmal auf das Füllhorn eines Füllautomaten aufziehen und mit Füllmasse wie insbesondere Wurstbrät füllen. Dabei ist es zur Vermeidung von Totzeiten erwünscht, daß die Schlauchraupen bereits im angelieferten Zustand an einem Ende verschlossen sind, so daß das Füllen sofort nach dem Aufziehen auf das Füllhorn beginnen kann. Es ist allgemein bekannt, derartige Endverschlüsse durch bloßes Abdrehen des die letzten Falten der Schlauchraupe bildenden Schlauchmaterials herzustellen. Die bekannten Verfahren hierfür haben sich jedoch als nicht genügend sicher gegenüber Beschädigungen des Schlauchmaterials sowie gegenüber einer einwandfreien Abdichtung beim Füllvorgang erwiesen.

So arbeitet ein bekanntes Verfahren (US-A-32 74 005) mit einem hakenförmigen Abdrehwerkzeug, das vom entgegengesetzten Ende durch die Schlauchraupe eingeführt wird und dann durch radiales Auslenken und Drehen das Material am zu verschließenden Raupenende erfaßt und in Drehrichtung mitnimmt. Abgesehen von den verhältnismäßig großen Totzeiten für das Einführen und spätere wieder Herausziehen des Werkzeugs besteht die Gefahr, daß die Raupe im Inneren von der Hakenspitze beschädigt wird oder das Schlauchmaterial gar nicht erfaßt und abgedreht wird.

Ferner ist ein Verfahren der eingangs genannten Art bekannt (DE-A-23 17 867), bei welchem das Abdrehen auf einem zuvor durch das Abdrehwerkzeug in die Raupe zentrisch eingeführten dünnen Stab erfolgt, der zum Schluß wieder aus dem gebildeten Drillzopf herausgezogen wird. Als Abdrehwerkzeug wird dabei eine Anordnung von mehreren mit ihren Kanten auf einer Konusfläche liegenden Drallplatten verwendet, die mit im wesentlichen konstantem Druck während des gesamten Abdrehvorgangs gegen das Raupenende anliegen und bei ihrer Drehung um die Raupenachse ein fortschreitendes Ausziehen der letzten Falten des Raupenendes und deren Verdrillung auf den Stab bewirken. Je nach der freien Länge des Stabes wird ein für die eingeschlossene Luft durchlässiger oder undurchlässiger Endverschluß erhalten. Die Anzahl der Drillgänge ist jedoch beschränkt und bietet keine ausreichende Gewähr für eine sichere Abdichtung gegen das Austreten der Füllmasse. Wird hingegen die Anzahl der Drillgänge vergrößert, besteht die Gefahr, daß das Schlauchmaterial reißt.

Der Erfindung liegt deshalb die Aufgabe zugrunde, ein Verfahren der eingangs genannten Art dahingehend weiter zu entwickeln, daß ohne die Gefahr eines Reißens die Anzahl der Drillgänge bei gleichzeitig vollständiger Abdichtung wesentlich erhöht werden kann.

Die Lösung dieser Aufgabe erfolgt in Übereinstimmung mit der Erfindung verfahrensgemäß dadurch, daß

(a) der Preßdruck des Werkzeugs gegen die letzten Falten der Raupe nur soviele Umdrehungen lang aufrechterhalten wird, bis sich das Schlauchmaterial auf dem Werkzeug festgezogen hat,

(b) danach das Werkzeug mit den daranhängenden ersten Drillgängen des Schlauchmaterials soweit zurückgezogen wird, daß das Werkzeug keinen Preßdruck mehr auf das Ende der Schlauchraupe ausübt und sich kein Teil des Werkzeugs mehr im Inneren der Schlauchraupe befindet,

(c) die Verdrehung fortgesetzt wird, wobei sich ein ins Innere der Schlauchraupe wandernder doppelwandiger Drillzopf aus Schlauchmaterial bildet und

(d) das Werkzeug von dem Schlauchmaterial unter weiterem Zurückziehen gelöst wird.

Die Erfindung beruht auf der Erkenntnis, daß ein beschädigungsfreies Verdrillen des Schlauchmaterials mit einer ausreichenden Anzahl von Drehungen zwischen etwa 20 und 30 nur möglich ist, wenn hierbei die Falten der Schlauchraupe ohne Anpreßdruck fortschreitend ausgezogen werden können, in Verbindung mit der überraschenden Feststellung, daß bei geeigneter Ausbildung des Werkzeugs wenige mit Preßdruck ausgeführte anfängliche Umdrehungen genügen, um das Ende des Schlauchmaterials auf dem Umfang des Werkzeugs unter Verdrehung festzuziehen, so daß diese dann — ohne die Gefahr des Abrutschens vom Werkzeug während der nachfolgenden Drehungen — um eine kurze Strecke zurückgezogen werden kann. Dennoch ist nach Beendigung des Abdrehens ein völliges Zurückziehen des Werkzeugs und dabei Lösen desselben von dem Schlauchmaterial möglich, was ggf. noch dadurch gefördert werden kann, daß in vorteilhafter Ausgestaltung der Erfindung die Drehrichtung des Werkzeugs zum Lösen des Eingriffs mit dem Schlauchmaterial kurzzeitig umgekehrt wird.

Es leuchtet ein, daß durch das erfindungsgemäße Verfahren ein doppelwandiger Drillzopf gebildet wird, dessen Gänge sich fortschreitend auf den bereits gebildeten Gängen abstützen, ohne daß — wie bei dem bekannten Verfahren — hierzu ein besonderer Stab in die Raupe eingeführt werden muß, der eine in den meisten Fällen unerwünschte Öffnung in zumindest einem Teil des Drillzopfes hinterläßt, wobei gleichzeitig die Anzahl der unausgerichtet innerhalb der Raupe entstehenden Drillgänge beliebig gesteigert und dadurch eine zuverlässige Abdichtung für den späteren Füllvorgang geschaffen werden kann.

Gemäß einem anderen Ausgestaltungsmerkmal der Erfindung wird die Drehung des Werkzeugs während der der Aufhebung des Preßdrucks dienenden Rückzugsbewegung aufrechterhalten, wodurch Totzeiten, die sonst durch das vorübergehende Stillsetzen des Werkzeugs entstehen würden, entfallen.

Noch ein weiteres Ausgestaltungsmerkmal des erfindungsgemäßen Verfahrens sieht vor, daß der Drillzopf beim Lösen des Werkzeugs vom Schlauchmaterial gesondert so tief in die Schlauchraupe hineingestoßen wird, daß das Schlauchende vollends von der Schlauchraupe aufgenommen wird. Es leuchtet ein, daß dadurch ein axiales Überstehen des aufgeweiteten Zopfendes, mit dem das Werkzeug zuvor das Schlauchmaterial erfaßt hatte, vermieden wird.

Bei einer Schlauchraupe, deren Falten auf Konusflächen liegen, so daß das eine Raupenende die Form eines vortretenden Kegelstumpfes und das andere Raupenende entsprechend hohlkonisch ausgebildet ist, wird das Erfassen des Schlauchmaterials durch das Werkzeug schließlich weiterhin dadurch begünstigt, daß die Raupe am hohlkonischen Ende verschlossen wird.

Eine Vorrichtung zum Bilden eines Endverschlusses an einem raupenförmig gerafften Stück Schlauchmaterial, insbesondere Kunstdarm für die Wurstherstellung, durch Abdrehen eines die letzten Falten der Schlauchraupe bildenden Materialabschnitts, die aus einem rahmenförmigen Gehäuse mit einer darin drehbar und axial verschiebbar gelagerten Welle besteht, deren gegen die zur Welle koaxiale Schlauchraupe vorschiebbares eines Ende ein Werkzeug bildet, von welchem das Schlauchmaterial beim Drehen des Werkzeugs unter Bildung eines Drillzopfes mitnehmbar ist, wobei zum Drehen der Welle ein Drehantrieb und zu deren Axialverschiebung ein Verschiebeantrieb mit einem Kraftzylinder vorgesehen sind, zeichnet sich erfindungsgemäß dadurch aus, daß das Werkzeug ein Dorn mit einer orthogonal zur Längsachse des Dorns ausgerichteter Stirnfläche ist, deren größte Radialerstreckung kleiner als der Außenradius, aber größer als der Innenradius der Schlauchraupe ist, daß die Mantelfläche des Dorns reibschlußfördernd ausgebildet ist und daß das rahmenförmige Gehäuse mit der Welle und deren Dreh- und Verschiebeantrieben auf einem Grundgestell in Achsrichtung der Welle verschieblich gelagert und bei vom Verschiebeantrieb vorgeschobenem Dorn mittels eines weiteren Kraftzylinders zwischen einer Anpreßstellung der Stirnfläche des Dorns gegen die letzten Falten der Schlauchraupe und einer den Dorn aus dem Inneren der Schlauchraupe gerade entfernenden preßdrucklosen Stellung bewegbar ist.

Weitere Merkmale zur vorteilhaften Ausgestaltung der erfindungsgemäßen Vorrichtung ergeben sich aus den Unteransprüchen 7 bis 12.

Die Erfindung wird nachstehend in Verbindung mit einem in der Zeichnung dargestellten Ausführungsbeispiel einer Abdrehvorrichtung näher erläutert. Es zeigt

Fig. 1 eine Draufsicht auf die Vorrichtung,

Fig. 2 eine Ansicht der Vorrichtung in Richtung des Pfeils II in Fig. 1,

Fig. 3 in größerem Maßstab eine Stirnansicht auf das eine Ende der Raupenhalterung in Richtung des Pfeils III in Fig. 1,

Fig. 4 einen Längsschnitt durch die Raupenhalterung nach Linie IV-IV in Fig. 3,

Fig. 5 einen Querschnitt durch die Raupenhalterung nach Linie V-V in Fig. 4,

Fig. 6 in gleichem Maßstab wie in den Fig. 3—5 einen Längsschnitt durch die Abdreheinheit nach Linie VI-VI in Fig. 1,

Fig. 7 eine Stirnansicht der Abdreheinheit in Richtung des Pfeiles VII in Fig. 6 und

Fig. 8a—e in schematischer Darstellung verschiedene Phasen des Abdrehvorgangs.

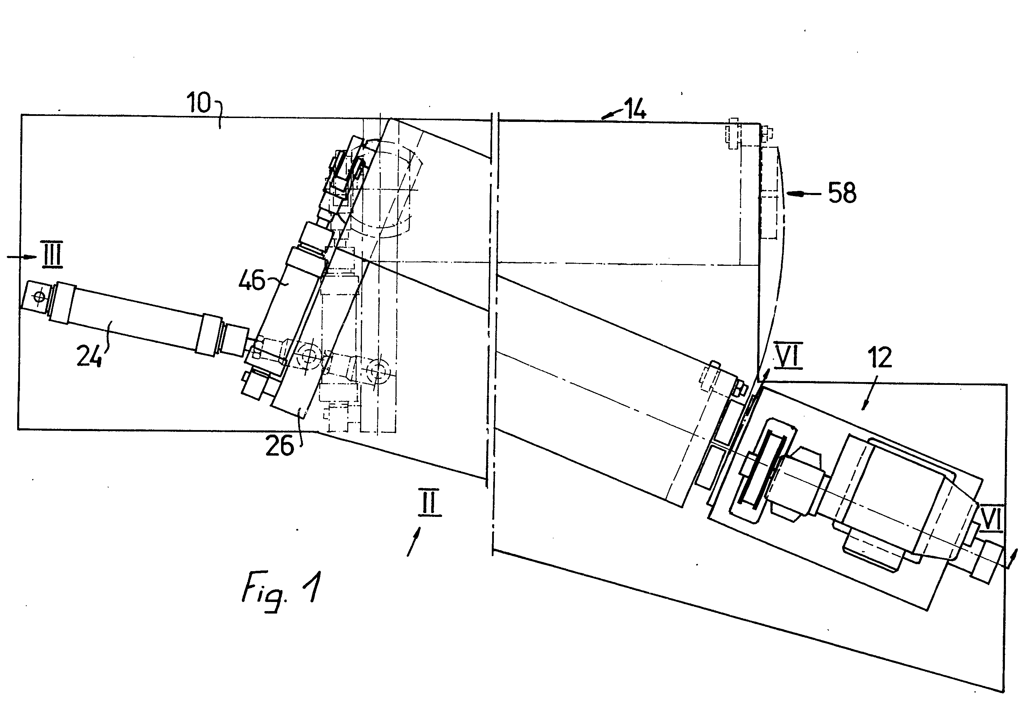

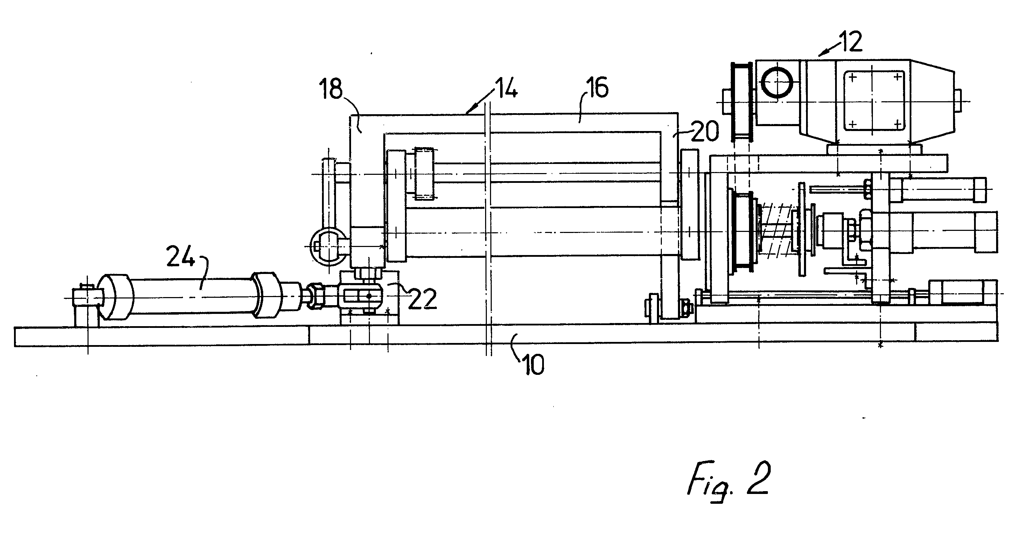

Gemäß der Darstellung in den Fig. 1 und 2 sind auf einer Grundplatte 10 eine in ihrer Gesamtheit mit 12 bezeichnete Abdreheinheit und eine gleichfalls in ihrer Gesamtheit mit 14 bezeichnete Raupenhalterung angeordnet.

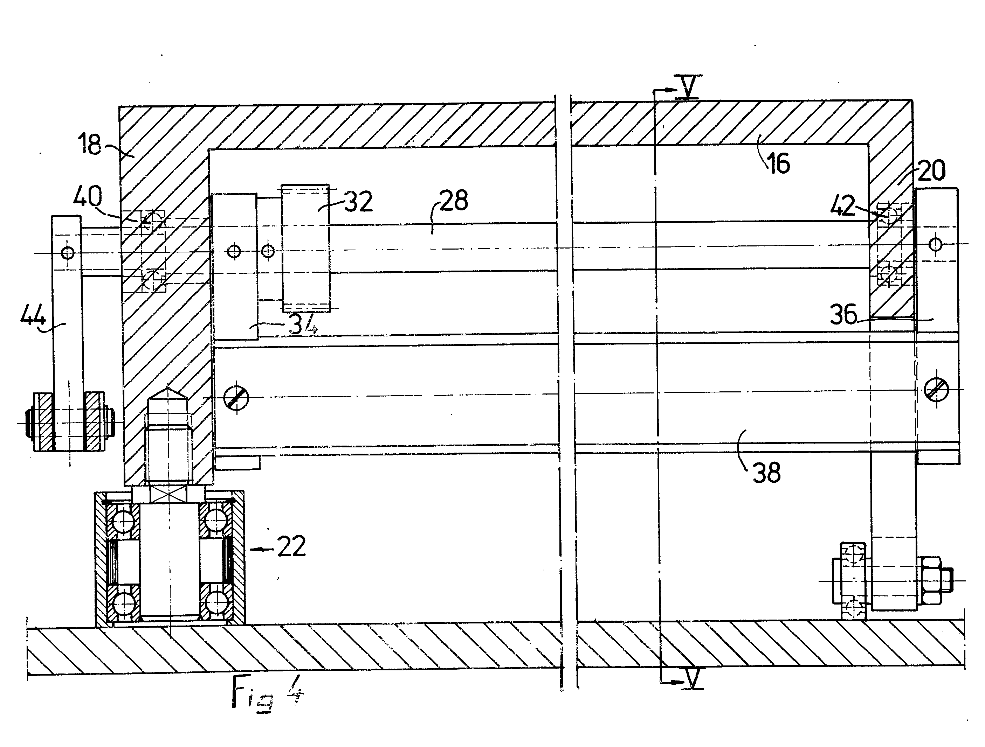

Die Raupenhalterung 14 besteht, wie die Fig. 2 und 4 erkennen lassen, aus einem unten offenen kastenförmigen Rahmen mit einer Oberwand 16 und zwei ungleich langen Seitenwänden 18, 20, von denen die längere Seitenwand 18 mittels eines aus Kugellagern bestehenden Stehlagers 22 auf der Grundplatte 10 derart gelagert ist, daß die Raupenhalterung 14 zwischen einer in Fig. 1 strichpunktiert eingezeichneten Aufnahmestellung und einer dort mit ausgezogenen Linien dargestellten Abdreh- und Auswurfstellung verschwenkt werden kann. Zur Durchführung der Schwenkbewegung dient ein Kraftzylinder 24, der mit seinem Gehäuseteil an der Grundplatte 10 und mit seiner Kolbenstange an einem einstückig mit der Seitenwand 18 ausgebildeten Querarm 26 der Raupenhalterung 14 angelenkt ist.

Durch den Kastenrahmen 16, 18, 20 erstrecken sich mit Abstand nebeneinander zwei Wellen 28, 30, die durch Zahnräder 32 (Fig. 4) gegenläufig miteinander gekuppelt sind. Die Wellen 28, 30 tragen an der Innenseite der Seitenwand 18 und der Außenseite der Seitenwand 20 nach unten gerichtete, paarweise angeordnete Hebel 34, 36 mit gegeneinander weisenden Maulöffnungen unterhalb der Seitenwand 20, in denen langgestreckte Halbschalen 38 befestigt sind, die zusammen eine im wesentlichen zylindrische Raupenaufnahme bildet.

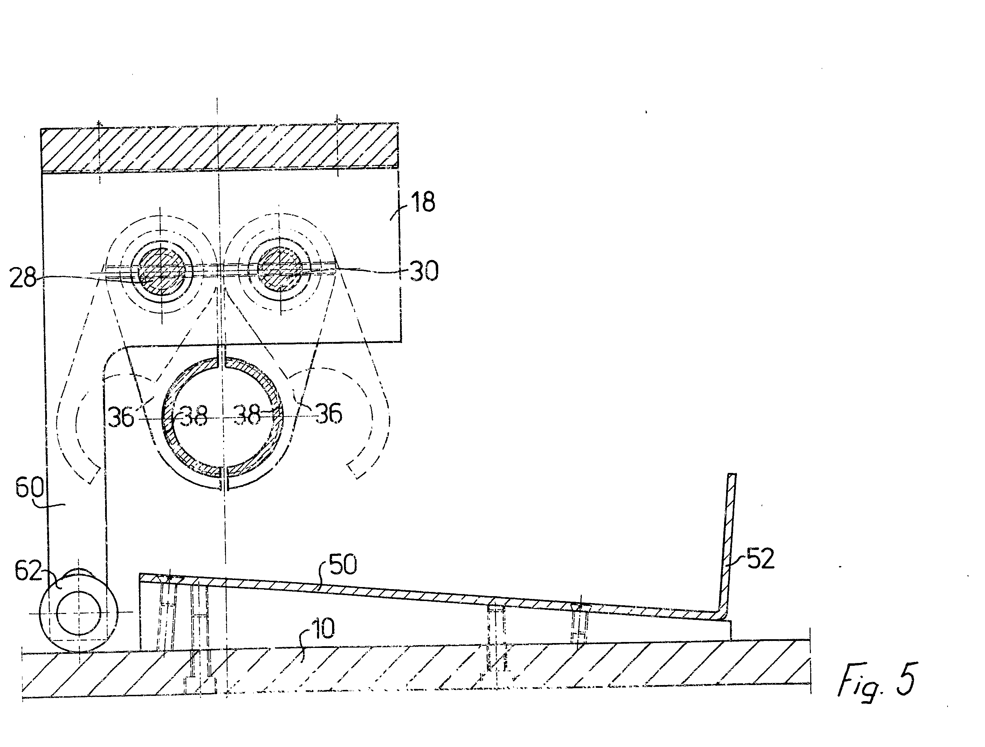

Die Wellen 34, 36 sind mit Kugellagern 40, 42 in den Seitenwänden 18 bzw. 20 des Kastenrahmens gelagert (Fig. 4). Die Welle 28 ist über die Seitenwand 18 hinaus verlängert und trägt einen Hebel 44, an welchem ein Kraftzylinder 46 gelenkig angreift, dessen Gehäuse an dem Querarm 26 bei 48 angelenkt ist. Mit Hilfe des Kraftzylinders 26 können die Halbschalen zwischen einer in Fig. 5 mit ausgezogenen Linien dargestellten geschlossenen Stellung, wie sie zum Abdrehen benötigt wird, und einer in Fig. 5 strichpunktiert angedeuteten voll geöffneten Stellung verschwenkt werden, in welcher die Halbschalen die zuvor gefaßte Raupe freigeben und auf ein geneigtes Fangblech 50 fallen lassen, das auf der Grundplatte 10 befestigt ist und auf dem die abgedrehten Raupen bis zu einer Abkantung 52 rollen, wo sie von der Bedienungsperson der Vorrichtung entnommen werden.

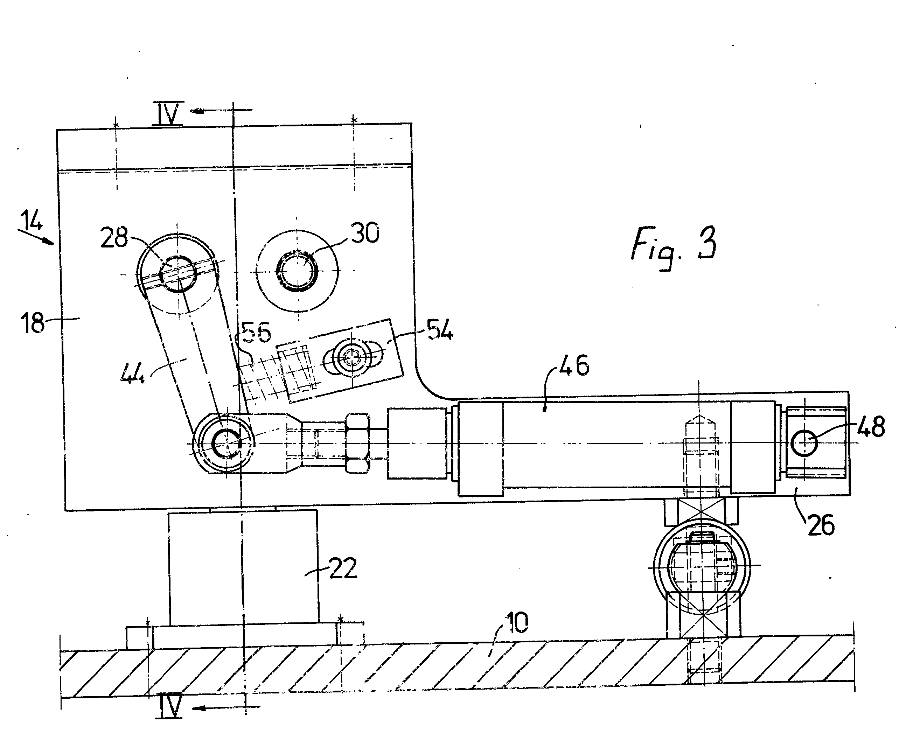

Wie Fig. 3 zeigt, ist an der Seitenwand 18 des Kastenrahmens ferner eine Federhalterung 54 mit einer Feder 56 angebracht, die gegen den Hebel 44 unter Vorspannung anliegt und ständig bestrebt ist, die Halbschalen 38 auseinander zu drücken. Durch diese Anordnung wird erreicht, daß bei der Entlastung des doppelt wirkenden Kraftzylinders 46 vom Betätigungsdruck nach dem Schließen der von den Halbschalen 38 gebildeten Raupenaufnahme diese sich geringfügig öffnet, so daß in der in Fig. 1 gestrichelt eingezeichneten Aufnahmestellung eine abzudrehende Raupe in Richtung des Pfeils 58 in die Raupenaufnahme axial eingeschoben werden kann. Dies kann von Hand oder mit Hilfe entsprechender Einrichtungen an einer Raffmaschine geschehen, an welcher die in den Zeichnungen gezeigte Vorrichtung angebaut sein kann.

Nach der Aufnahme der abzudrehenden Raupe wird die Raupenaufnahme durch erneute Druckbeaufschlagung des Kraftzylinders 46 geschlossen, und die gesamte Raupenhalterung 14 wird mit Hilfe des Kraftzylinders 24 in die in Fig. 1 in ausgezogenen Linien dargestellte Stellung verschwenkt, in welcher das eine Ende der gehaltenen Raupe vor die Abdreheinheit 12 zu liegen kommt, die im folgenden näher beschrieben wird. Um die Raupenhalterung 14 bei der Verschwenkung zu führen, kann die Seitenwand 20 mit einer Verlängerung 60 (Fig. 5) versehen sein, an deren Ende eine auf der Grundplatte 10 sich abstützende Rolle 62 gelagert ist.

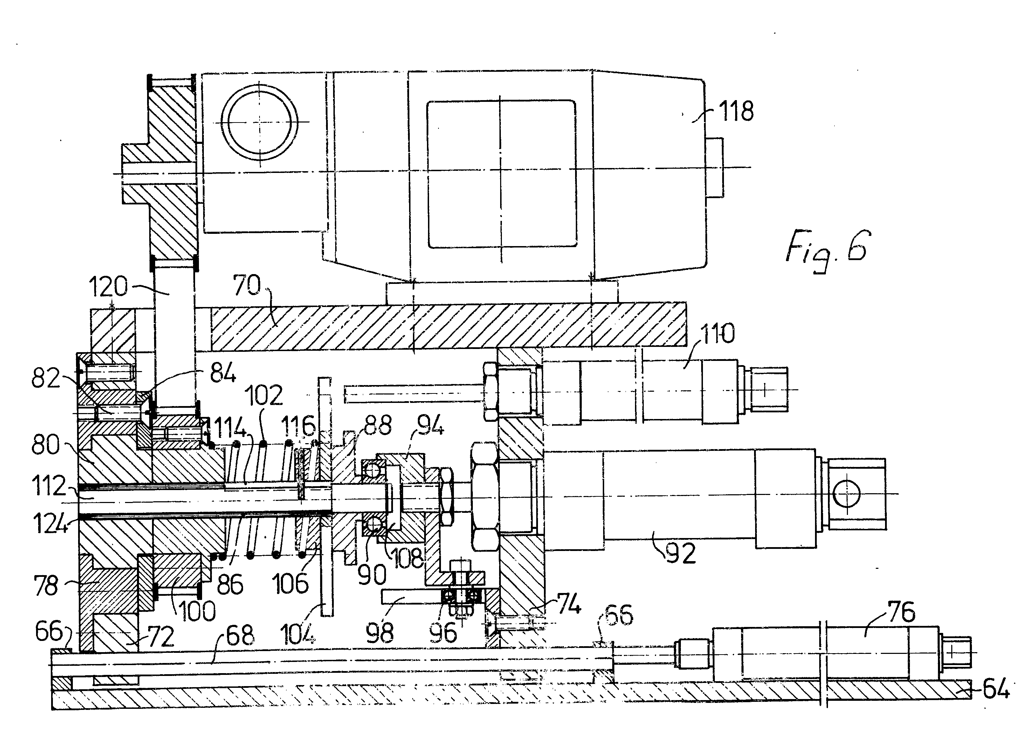

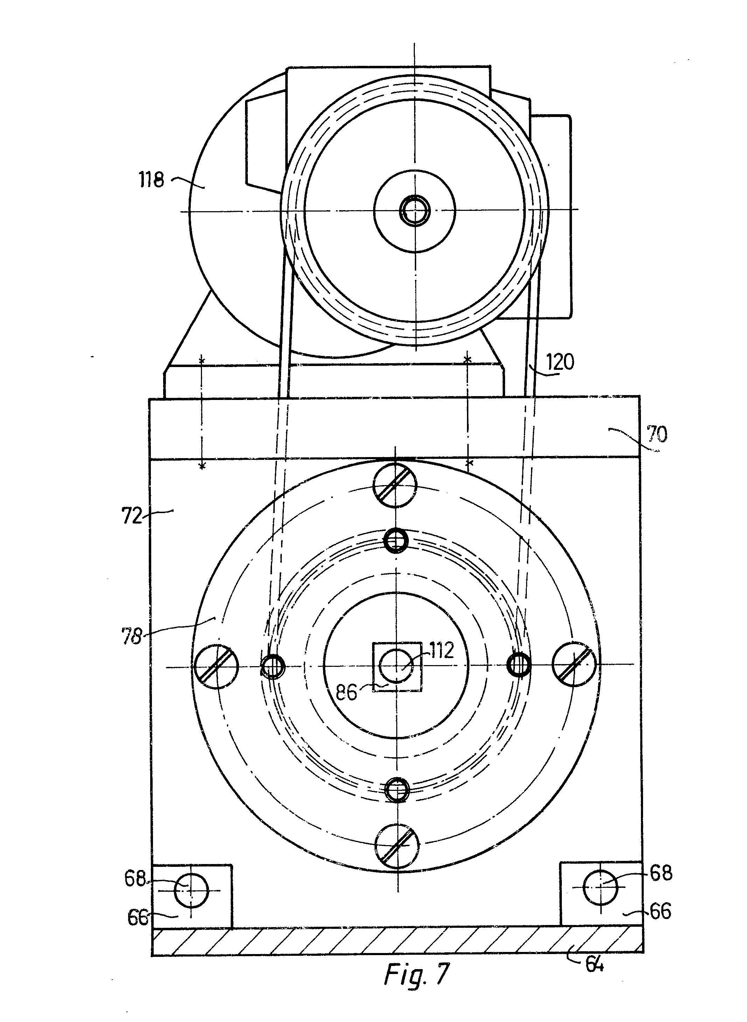

Die Abdreheinheit 12 weist gemäß der Darstellung in den Fig. 1, 6 und 7 eine auf der Grundplatte 10 befestigte gesonderte Grundplatte 64 auf, auf welcher mittels Stützen 66 zwei mit Abstand parallele Führungsstangen 68 angeordnet sind. Die Führungsstangen 68 bilden eine Führung für einen aus einer Oberwand 70 und zwei Seitenwänden 72, 74 bestehenden Kastenrahmen, der mittels eines zwischen den Führungsstangen 38 an der Seitenwand 74 angreifenden und mit seinem Gehäuse auf der Grundplatte 64 befestigten Kraftzylinders 76 zwischen der in Fig. 6 gezeigten Arbeitsstellung und einer zurückgezogenen Stellung verschiebbar ist.

Die Seitenwand 72 des Kastenrahmens 70, 72, 74 nimmt in einer verhältnismäßig großen Öffnung eine Lagerschale 78 auf, in welcher eine dickwandige Scheibe 80 gelagert und mittels einer an der Lagerschale 78 mit Schrauben 82 befestigten Ringplatte 84 gegen Axialverschiebung gesichert ist.

Die Scheibe 80 enthält eine zentrale Durchbrechung von quadratischem Querschnitt, durch welche sich eine Vierkantwelle 86 mit einem Ende verschieblich erstreckt. Das andere Ende der Vierkantwelle 86 ist zylindrisch ausgebildet und trägt eine Druckscheibe 88 sowie ein Kugellager 90, an dessen Außenring die Kolbenstange eines mit seinem Gehäuse in eine Bohrung der Seitenwand 74 eingesetzten Kraftzylinders 92 über eine topfförmige Lagerschale 94 angreift. Ein hinter der Lagerschale 94 auf der Kolbenstange des Kraftzylinders 92 befestigter Winkelhebel trägt an seinem abgewinkelten Ende ein Kugellager 96, das in einem an der Seitenwand 74 befestigten Gabelstück 98 abrollt und dadurch die Kolbenstange des Kraftzylinders 92 gegen Verdrehung sichert.

Auf der Vierkantwelle 86 ist ferner im Anschluß an die dickwandige Scheibe 80 eine Riemenscheibe 100 verschieblich angeordnet, die von einer Druckfeder 102 gegen die Ringplatte 84 in Anlage gehalten wird. Das andere Ende der Druckfeder 102 stützt sich gegen eine Scheibe 104 ab, die mittels einer an ihr befestigten Nabe 106 verschieblich auf der Vierkantwelle 86 angeordnet ist und sich ihrerseits gegen die Druckscheibe 88 abstützt, die über den inneren Laufring des Kugellagers 90 von einem Sprengring 108 in Stellung auf dem zylindrischen Ende der Vierkantwelle 86 gehalten wird.

Ein in einer weiteren Bohrung der Seitenwand 74 befestigter Kraftzylinder 110 ist mit seiner Kolbenstange gegen den Randbereich der Scheibe 104 gerichtet und vermag diese zusammen mit der Nabe 106 gegen den Druck der Feder 102 auf der Vierkantwelle zu verschieben. Die Vierkantwelle 86 ist ferner mit einer zylindrischen Bohrung versehen, in welcher ein stangenförmiger Stößel 112 verschieblich ist, der mittels eines einen Längsschlitz 114 in der Vierkantwelle 86 durchsetzenden Stiftes 116 mit der Nabe 106 verbunden ist. Die Länge des Stößels 112 ist so bemessen, daß er bei nichtbetätigtem Kraftzylinder 110 vollständig in die Bohrung der Vierkantwelle 86 zurückgezogen ist.

Auf der Oberwand 70 des Kastenrahmens 70, 72, 74 ist ein reversierbarer elektrischer Getriebemotor 118 befestigt, der an seiner Abtriebswelle eine Riemenscheibe 122 trägt, die über einen Riemen, vorzugsweise einen Zahnriemen 120 mit der Riemenscheibe 100 antriebsmäßig verbunden ist.

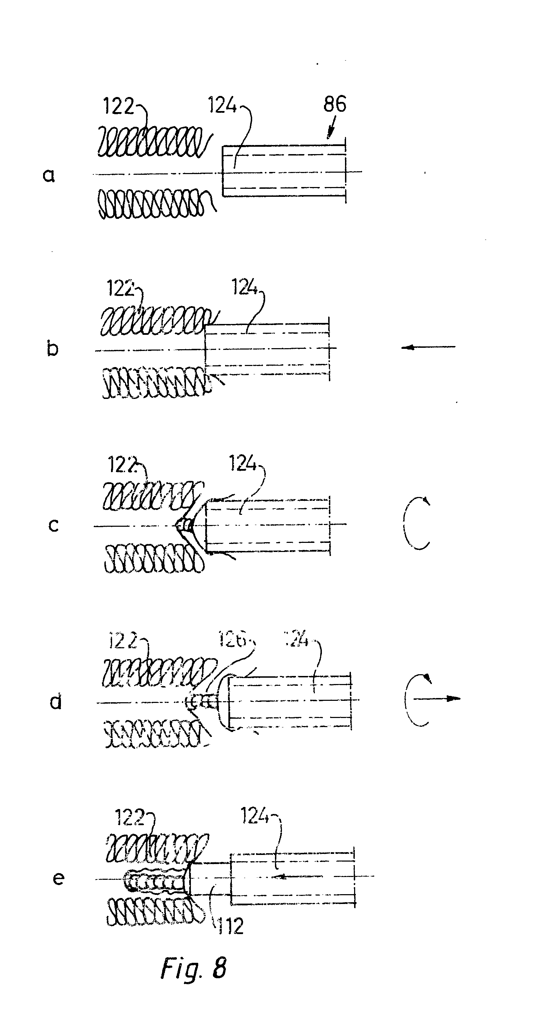

Die Wirkungsweise der vorbeschriebenen Vorrichtung ist folgende: zunächst wird, wie oben beschrieben, eine abzudrehende Schlauchraupe in Richtung des Pfeils 58 in die in der Aufnahmestellung (in Fig. 1 gestrichelt) befindliche Raupenhalterung zwischen die unter der Wirkung der Feder 56 geringfügig voneinander gespreizten Halbschalen 38 eingeschoben. Sofern die abzudrehenden Schlauchraupen unter konischer Faltenbildung gerafft sind, wird die Raupe mit dem kegelstumpfförmigen Ende voraus eingeschoben. Hieraufhin wird die von den Halbschalen 38 gebildete Raupenaufnahme durch Betätigung des Kraftzylinders 46 geschlossen, und die Raupenhalterung 14 wird durch Betätigung des Kraftzylinders 24 in die in Fig. 1 ausgezogen dargestellte Abdrehstellung verschwenkt, wodurch das hohlkonische Ende der gehalterten Raupe vor das in die Scheibe 80 zurückgezogene Ende der Vierkantwelle 86 gelangt. Die Abdreheinheit 12 befindet sich dabei durch entsprechende Betätigung des Kraftzylinders 76 in zurückgezogener Stellung. Durch die Betätigung des auf die Halbschalen 38 wirkenden Kraftzylinders 46 ist in die Raupe auf ihrer gesamten Länge fest zwischen den Halbschalen gegen Verdrehung und Axialverschiebung gehalten. In dieser Stellung nimmt die Vierkantwelle 86 im Verhältnis zur Schlauchraupe die in Fig. 8a gezeigte Stellung ein.

Nun wird zunächst mit Hilfe des Kraftzylinders 76 die Abdreheinheit auf den Führungsstangen 68 gegen die Raupenhalterung 14 vorgeschoben und durch Betätigung des Kraftzylinders 92 das freie Ende der Vierkantwelle 86 aus der Scheibe 80 heraus und in das ggf. hohlkonische Ende der gehalterten Raupe gedrückt, wie dies in Fig. 8b veranschaulicht ist. Die Vierkantwelle ist so bemessen, daß ihre größte radiale Erstreckung wesentlich kleiner als der Außenumfang der Schlauchraupe ist. Dadurch dringt das das Werkzeug zum Abdrehen bildende vordere Ende 124 der Vierkantwelle 86, wie aus Fig. 8b ersichtlich, verhältnismäßig tief in die Schlauchraupe ein, und das außerhalb dieses Bereichs gelegene Schlauchmaterial gelangt auf den Außenumfang der Vierkantwelle.

Nun wird der Getriebemotor 118 eingeschaltet, und das vorerwähnte Schlauchmaterial zieht sich auf dem Außenumfang des vorderen Endes 124 der Vierkantwelle fest, während gleichzeitig das anschließende Schlauchmaterial während einiger Umdrehungen einen zunächst kurzen Drillzopf 126 bildet (Fig. 8c). Nach diesen wenigen Umdrehungen wird der Kraftzylinder 76 in umgekehrter Richtung betätigt und zieht die Abdreheinheit 12 wieder zurück (Fig. 8d). Der wirksame Hub des Kraftzylinders 76 ist durch (nicht gezeigte) Anschläge auf wenige Millimeter, beispielsweise 5 mm begrenzt. Während dieser Rückzugsbewegung und auch danach bleibt der Getriebemotor 118 eingeschaltet, und die drehende Vierkantwelle 86 holt weiteres Schlauchmaterial aus den Falten der Raupe und verdrillt dieses zu einem fortschreitend in die Raupe wanderndem Zopf, ohne daß das Ende 124 der Vierkantwelle 86 gegen die Schlauchraupe drückt.

Nach einer ausreichenden Anzahl von Umdrehungen wird der Getriebemotor 118 stillgesetzt und der Kraftzylinder 110 betätigt, wodurch der Stößel 112 aus der Vierkantwelle herausgeschoben wird und das Schlauchende von dem vorderen Ende 124 der Vierkantwelle 86 abzieht und in die Raupe 122 hineindrückt. Zur Erleichterung des Abziehens kann dabei auch der Getriebemotor 118 kurzzeitig im entgegengesetzten Drehsinn eingeschaltet werden. Daraufhin wird die Vierkantwelle 86 durch umgekehrte Betätigung des Kraftzylinders 92 wieder in die Scheibe 80 zurückgezogen, wobei gleichzeitig auch der Kraftzylinder 110 in umgekehrter Richtung betätigt wird und die Scheibe 104 mit der Nabe 106 freigibt, die unter der Wirkung der Druckfeder 102 den Stößel 112 in die Vierkantwelle 86 zurückzieht. Damit befindet sich die Abdreheinheit wieder in der Ausgangsstellung, und die Halbschalen 38 werden durch Betätigung des Kraftzylinders 46 vollständig geöffnet, wodurch die abgedrehte Raupe auf das Fangblech 50 abgeworfen wird. Hiernach verschwenkt die Raupenhalterung durch entsprechende Betätigung des Kraftzylinders 46 wieder in die Aufnahmestellung und steht bereit für die Aufnahme einer neuen Raupe.

Es versteht sich von selbst, daß der vorbeschriebene Funktionsablauf innerhalb eines jeden Arbeitszyklus zweckmäßig vollautomatisch gesteuert wird. Zu diesem Zweck sind die doppelt wirkend ausgebildeten Kraftzylinder mit entsprechenden elektromagnetisch betätigbaren Ventilen versehen. Zur Betätigung der Kraftzylinder wird zweckmäßig Druckluft verwendet. Es ist jedoch auch eine Betätigung mit Druckflüssigkeit denkbar.

**Patentansprüche**

1. Verfahren zum Bilden eines Endverschlusses an einem raupenförmig gerafften Stück Schlauchmaterial, insbesondere Kunstdarm für die Wurstherstellung, durch Abdrehen eines die letzten Falten der Schlauchraupe (122) bildenden Materialabschnitts, bei dem ein sich koaxial zur Raupe erstreckendes Werkzeug (124) mit geringerer Radialerstreckung als der äußere Raupenumfang von außen gegen die letzten Falten der Raupe gepreßt und bezüglich dieser verdreht wird, dadurch gekennzeichnet, daß

(a) der Preßdruck des Werkzeugs (124) gegen die letzten Falten der Raupe nur soviele Umdrehungen lang aufrechterhalten wird, bis sich das Schlauchmaterial auf dem Werkzeug festgezogen hat,

(b) danach das Werkzeug (124) mit den daranhängenden ersten Drillgängen des Schlauchmaterials soweit zurückgezogen wird, daß das Werkzeug keinen Preßdruck mehr auf das Ende der Schlauchraupe ausübt und sich kein Teil des Werkzeugs mehr im Inneren der Schlauchraupe befindet,

(c) die Verdrehung fortgesetzt wird, wobei sich ein ins Innere der Schlauchraupe wandernder doppelwandiger Drillzopf (126) aus Schlauchmaterial bildet, und

(d) das Werkzeug (124) von dem Schlauchmaterial unter weiterem Zurückziehen gelöst wird.

2. Verfahren nach Anspruch 1, dadurch gekennzeichnet, daß die Dreheinrichtung des Werkzeugs (124) zum Lösen des Eingriffs mit dem Schlauchmaterial kurzzeitig umgekehrt wird.

3. Verfahren nach Anspruch 1 oder 2, dadurch gekennzeichnet, daß die Drehung des Werkzeugs (124) während der der Aufhebung des Preßdrucks dienenden Rückzugsbewegung aufrechterhalten wird.

4. Verfahren nach Anspruch 1, 2 oder 3, dadurch gekennzeichnet, daß der Drillzopf (126) beim Lösen des Werkzeugs (124) vom Schlauchmaterial gesondert so tief in die Schlauchraupe (122) hineingestoßen wird, daß das Schlauchende vollends von der Schlauchraupe aufgenommen wird.

5. Verfahren nach einem der vorhergehenden Ansprüche bei einer Schlauchraupe, deren Falten auf Konusflächen liegen, dadurch gekennzeichnet, daß die Schlauchraupe (122) am hohlkonischen Ende verschlossen wird.

6. Vorrichtung zum Bilden eines Endverschlusses an einem raupenförmig gerafften Stück Schlauchmaterial, insbesondere Kunstdarm für die Wurstherstellung, durch Abdrehen eines die letzten Falten der Schlauchraupe (122) bildenden Materialabschnitts, bestehend aus einem rahmenförmigen Gehäuse (70, 72, 74) mit einer darin drehbar und axial verschiebbar gelagerten Welle (86), deren gegen die zur Welle koaxiale Schlauchraupe (122) vorschiebbares eines Ende ein Werkzeug bildet, von welchem das Schlauchmaterial beim Drehen des Werkzeugs unter Bildung eines Drillzopfes (126) mitnehmbar ist, wobei zum Drehen der Welle (86) ein Drehantrieb (118, 120, 122, 100) und zu deren Axialverschiebung ein Verschiebeantrieb (92, 92, 90, 88) mit einem Kraftzylinder (92) vorgesehen sind, dadurch gekennzeichnet, daß das Werkzeug ein Dorn (124) mit einer orthogonal zur Längsachse des Dorns ausgerichteter Stirnfläche ist, deren größte Radialerstreckung kleiner als der Außenradius, aber größer als der Innenradius der Schlauchraupe ist, daß die Mantelfläche des Dorns (124) reibschlußfördernd ausgebildet ist und daß das rahmenförmige Gehäuse (70, 72, 74) mit der Welle (86) und deren Dreh- und Verschiebeantrieben auf einem Grundgestell (64) in Achsrichtung der Welle verschieblich gelagert und bei vom Verschiebeantrieb vorgeschobenem Dorn (124) mittels eines weiteren Kraftzylinders (76) zwischen einer Anpreßstellung der Stirnfläche des Dorns (124) gegen die letzten Falten der Schlauchraupe (122) und einer den Dorn aus dem Inneren der Schlauchraupe gerade entfernenden preßdrucklosen Stellung bewegbar ist.

7. Vorrichtung nach Anspruch 6, dadurch gekennzeichnet, daß der Dorn (124) als Mehrkant, vorzugsweise Vierkant ausgebildet ist.

8. Vorrichtung nach Anspruch 6, dadurch gekennzeichnet, daß der Dorn ais Zylinder mit zylindrischem geriffeltem, gerändeltem oder gerauhtem Mantel ausgebildet ist.

9. Vorrichtung nach einem der Ansprüche 6, 7 oder 8, dadurch gekennzeichnet, daß der Kraftzylinder (92) des Verschiebeantriebs (92, 94, 90, 88) für die Welle (86) ein einfach wirkender Kraftzylinder ist und daß zum Zurückverschieben der Welle (86) eine Rückstellfeder (102) vorgesehen ist.

10. Vorrichtung nach einem der Ansprüche 6 bis 9, dadurch gekennzeichnet, daß die Welle (86) ein Getrieberad (100) drehfest, aber axial verschieblich durchsetzt, welches von einem elektrischen Getriebemotor (118) antreibbar ist.

11. Vorrichtung nach Anspruch 10, dadurch gekennzeichnet, daß der Antrieb des Getrieberades (100) über einen Zahnriementrieb (122) erfolgt.

12. Vorrichtung nach einem der Ansprüche 6 bis 11, dadurch gekennzeichnet, daß der Kraftzylinder (92) des Verschiebeantriebs an der Welle (86) über ein Axialdrucklager (90) angreift.

13. Vorrichtung nach Anspruch 12, dadurch gekennzeichnet, daß das Axialdrucklager (90) ein Wälzlager ist.

14. Vorrichtung nach einem der Ansprüche 6 bis 13, dadurch gekennzeichnet, daß die Welle (86) mit einer Axialbohrung versehen ist, die einen Stößel (112) zum nachträglichen Hineinstoßen des Drillzopfes (126) in die Schlauchraupe (122) verschieblich aufnimmt.

15. Vorrichtung nach Anspruch 14, dadurch gekennzeichnet, daß die Welle (86) mit einem Längsschlitz (114) versehen ist, durch welchen der Stößel (112) mit einem auf der Welle verschieblichen Betätigungsglied (104, 106) gekuppelt ist.

16. Vorrichtung nach Anspruch 15, dadurch gekennzeichnet, daß das Betätigungsglied von einer eine hülsenförmige Nabe (106) aufweisenden Scheibe (104) gebildet ist, die von der exzentrisch an ihr angreifenden Kolbenstange eines dritten Kraftzylinders (110) gegen die Wirkung der Rückstellfeder (102) des Verschiebeantriebs axial auf der Welle (86) verschiebbar ist.

17. Vorrichtung nach einem der Ansprüche 6 bis 16, gekennzeichnet durch eine die Schlauchraupe (122) am Außenumfang auf einen wesentlichen Teil ihrer Länge erfassende undrehbare Halterung (14).

18. Vorrichtung nach Anspruch 17, dadurch gekennzeichnet, daß die Halterung (14) zwei gegeneinander bewegbare langgestreckte Halbschalen (38) aufweist.

19. Vorrichtung nach Anspruch 18, dadurch gekennzeichnet, daß die Halbschalen (38) an von einem doppelt wirkenden Kraftzylinder gegensinnig verschwenkbaren Hebeln (34, 36) befestigt sind.

20. Vorrichtung nach Anspruch 19, dadurch gekennzeichnet, daß die Hebel (34, 36) an oberhalb der Halbschalen (38) nebeneinander angeordneten Wellen (28, 30) angebracht sind.

21. Vorrichtung nach Anspruch 19 oder 20, dadurch gekennzeichnet, daß die Hebel (34, 36) in der Schließstellung der Halbschalen (38) von in Öffnungsrichtung wirkenden Federmitteln (56) belastet sind, durch welche die Halbschalen (38) bei der Entlastung des Kraftzylinders (46) vom Schließdruck geringfügig auseinanderbewegbar sind.

22. Vorrichtung nach einem der Ansprüche 17 bis 21 zur Verwendung in Verbindung mit einer Raffvorrichtung zum raupenförmigen Raffen vorbestimmter Längen von Schlauchmaterial, dadurch gekennzeichnet, daß die Halterung (14) zwischen einer an das Ausstoßende der Raffvorrichtung anschließenden Übernahmestellung und einer mit dem Abdrehwerkzeug fluchtenden Abdrehstellung verschieb- oder verschwenkbar ist.

**Claims**

1. Process for forming a terminal closure onto a length of warmshaped, shirred tubular material, in particular an artificial sausage casing for the production of sausage, by twisting shut a section of tubular material forming the last folds of the tubing length (122), in which process a tool (124) which extends coaxially with respect to the tubing length and which is of shorter radial extent than the outer tubing length periphery is pressed from the outside against the last folds of the tubing length, and twisted relatively to the said tubing lenght, characterized in that

(a) the application pressure of the tool (124) against the last folds of the tubing length is maintained for only sufficiently many revolutions for the tubular material to become drawn tightly on to the tool,

(b) then the tool (124) with the first twist turns of tubular material adhering thereto is withdrawn so far that the tool no longer applies any application pressure on the end of the tubing length, and no part of the tool remains in the interior of the tubing length,

(c) the twisting operation is continued, forming a double-walled twisted tail (126) of tubular material which migrates into the interior of the tubing length, and

(d) the tool (124) is released from the tubular material, as it is further withdrawn.

2. Process according to claim 1, characterized in that the direction of rotation of the tool (124) is briefly reversed for releasing its engagement with the tubular material.

3. Process according to claim 1 or 2, characterized in that the rotating of the tool (124) is maintained during the withdrawing movement which serves to discontinue the application pressure.

4. Process according to claim 1, 2 oder 3, characterized in that when the tool (124) is released from the tubular material the twist tail (126) is pushed specially so deeply into the tubing length (122) that the tubing length end is completely contained by the tubing length.

5. Process according to one of the preceding claims in the case of a tubing length whose folgs lie on conical surfaces, characterized in that the tubing length (122) is closed at the hollow conical end.

6. Apparatus for forming a terminal closure onto a length of warmshaped shirred tubular material, in particular an artificial sausage casing for the production of sausages, by twisting shut a section of material forming the last folds of the tubing length (122), comprising a frame-like housing (70, 72, 74) with a shaft (86) which is mounted to be rotatable therein an axially displaceable and whose end adapted to be advanced towards the tubing length (122) coaxial with the shaft forms a tool by which the tubular material can be carried along as the tool rotates, forming a twist tail (126), and a rotary drive (118, 120, 122, 100) is provided for rotating the shaft (86) and a shifting drive (92, 92, 90, 88) is provided for shifting said shaft axially, said shifting drive having a drive cylinder (92), characterized in that the tool is a mandrel (124) with an end face which is directed at right angles to the longitudinal axis of the mandrel and whose greatest radial extent is smaller than the outer radius gut greater than the inner radius of the tubing length, that the generated surface of the mandrel (124) is so constructed as to promote frictional engagement, and that the frame-like housing (70, 72, 74) with the shaft (86) and the rotary and shifting drives of said shaft is mounted to be shiftable in the axial direction of the shaft on a bed frame (64) and, when the mandrel (124) is advanced by the shifting drive, is movable between a position corresponding to applying the end face of the mandrel (124) against the last folds of the tubing length (122) and a position without application pressure which corresponds to just removing the mandrel from the interior of the tubing length.

7. Apparatus according to claim 6, characterized in that the mandrel (124) is constructed with a polygonal, preferably a square, shape.

8. Apparatus according to claim 6, characterized in that the mandrel is constructed as a cylinder with a fluted, milled or roughened cylindrical surface.

9. Apparatus according to one of claims 6, 7 or 8, characterized in that the drive cylinder (92) of the shifting drive (92, 94, 90, 88) for the shaft (86) is a single-acting drive cylinder, and that a restoring spring (102) is provided for shifting-back the shaft (86).

10. Apparatus according to one of claims 6 to 9, characterized in that the shaft (86) extends through a gearwheel (100) in such a manner as to be fast in rotation therewith but axially shiftable therein, said wheel bring capable of being driven by an electric gear motor (118).

11. Apparatus according to claim 10, characterized in that the driving of the gearwheel (100) is effected by means of a toothed-belt drive (122).

12. Apparatus according to one of claims 6 to 11, characterized in that the drive cylinder (92) of the shifting drive acts on the shaft (86) via an axial thrust bearing (90).

13. Apparatus according to claim 12, characterized in that the axial thrust bearing (90) is a rolling contact bearing.

14. Apparatus according to one of claims 6 to 13, characterized in that the shaft (86) ist provided with an axial bore which receives a push rod (112) shiftable therein for the subsequent pushing of the twisted tail (126) into the tubing length (122).

15. Apparatus according to claim 14, characterized in that the shaft (86) is provided with a longitudinal slot (114) through which the push rod (112) is coupled with an actuating element (104, 106) shiftable on the shaft.

16. Apparatus according to claim 15, characterized in that the actuating element is formed of a plate (104) which has a sleeve-form hub (106) and which is shiftable axially on the shaft (86) against the action of the restoring spring (102) of the shifting drive by the piston rod of a third drive cylinder (110), said rod being attached eccentrically to said plate.

17. Apparatus according to one of claims 6 to 16, characterized by a non-rotatable holder (14) grasping the tubing length (122) at the outer periphery over a substantial portion of the longitudinal extent of the said tubing length.

18. Apparatus according to claim 17, characterized in that the holder (14) comprises two elongated half shells (38) adapted to move towards one another.

19. Apparatus according to claim 18, characterized in that the half shells (38) are secured on levers (34, 36) adapted to be rocked in opposite directions by a double-acting drive cylinder.

20. Apparatus according to claim 19, characterized in that the levers (34, 36) are arranged on shafts (28, 30) arranged side by side above the half shells (38).

21. Apparatus according to claim 19 or 20, characterized in that in the closed position of the half shells (38) the levers (34, 36) are under load from spring means (56) which act in the opening direction and which can move the half shells (38) slightly away from one another on relief of the drive cylinder (46) from closing pressure.

22. Apparatus according to one of claims 17 to 21 for use in conjunction with a shirring device for shirring predetermined lengths of tubular material to a warm-shape, characterized in that the holder (14) is shiftable or pivotable between a take-over position adjoining the ejection end of the shirring device and a twisting-shut position in alignment with the twisting-shut tool.

**Revendications**

1. Procédé de formation d'un tampon de fermeture à une portion creuse d'enveloppe tubu-laire plissée, notamment de boyaux synthétiques pour la fabrication de saucisses, par la torsion d'une section de matière formant les derniers plis (122) du tube plissé, procédé dans lequel un outil (124) qui s'étend coaxialement par rapport à l'enveloppe tubulaire plissée et dont la dimension radiale est légèrement inférieure à celle du périmètre extérieur de l'enveloppe plissée est appliqué contre les derniers plis du tube plissé et soumis à une rotation par rapport à ce tube, ce procédé étant caractérisé en ce que:

a) la pression exercée par l'outil (124) contre les derniers plis du tube plissé n'est maintenue que durant le nombre de tours nécessaire pour faire en sorte que la matière tubulaire enserre l'outil;

b) après que l'outil (124), dont sont solidaires les premières spires de la matière tubulaire torsadée, a été rappellé en arrière, cet outil n'exerce plus aucune pression sur l'extrémité de l'enveloppe plissée, tandis qu'aucune partie de l'outil ne se trouve encore à l'intérieur de cette enveloppe plissée;

c) on poursuit la torsion, de manière à former une mèche torsadée (126) à double paroi, en matière tubulaire, qui erre à l'intérieur de l'enveloppe plissée, et

d) l'outil (124) est dégagé de la matière tubulaire plissée en poursuivant le retrait de l'outil.

2. Procédé selon la revendication 1, caractérisé par le fait que le sens de rotation de l'outil (124) est inversé pendant un court laps de temps afin de desserrer l'emprise qu'exerce la matière tubulaire sur cet outil.

3. Procédé selon l'une ou l'autre des revendications 1 ou 2, caractérisé par le fait que la rotation de l'outil (124) est maintenue pendant la détente de la pression produite par le recul dudit outil.

4. Procédé selon l'une quelconque des revendications 1 à 3, caractérisé par le fait que la mèche torsadée (126), pendant le dégagement de l'outil (124) par rapport à la matière tubulaire plissée, est enfoncée dans l'enveloppe plissée (122) dans une mesure telle que l'extrémité de l'enveloppe plissée (122) soit totalement prélevée de ladite enveloppe.

5. Procédé selon l'une quelconque des revendications 1 à 4, caractérisé par le fait que, dans le cas d'une enveloppe tubulaire plissée dont les plis portent sur des surfaces coniques, l'enveloppe tubulaire plissée (122) est fermée à son extrémité conique creuse.

6. Appareil de formation d'un tampon de fermeture à une portion creuse d'enveloppe tubulaire plissée, notamment des boyaux synthétiques pour la fabrication de saucisses, par la torsion d'une section de matière formant les derniers plis de l'enveloppe tubulaire plissée (122), ce dispositif comprenant un carter en forme de caisson (70, 72, 74) dans lequel est monté en rotation et en coulissement axial un arbre (86) dont une extrémité constitue un outil pouvant coulisser par rapport à une enveloppe tubulaire plissée (122) coaxiale audit arbre, cet outil pouvant entraîner pendant sa rotation la matière tubulaire plissée en formant ainsi une mèche torsadée (126), la rotation de l'arbre (86) étant assurée par une commande (118, 120, 122, 100) tandis que son coulissement axial est assuré par une commande de translation axiale (92, 94, 90, 88) comprenant un vérin (92), ce dispositifétant caractérisé en outre par le fait que l'outil est constitué par un mandrin (124) pourvu d'une face frontale perpendiculaire à l'axe longitudinal du mandrin et dont la dimension radiale est inférieure au rayon extérieur, mais supérieur au rayon intérieur, du tube plissé, que la surface extérieure du mandrin (124) est conçue de façon à faciliter l'entraînement du boyau par friction, et que le carter en forme de caisson (70, 72, 74) avec l'arbre (86) et ses commandes de rotation et de translation est monté de façon à pouvoir pivoter et se déplacer en translation sur un socle (64) dans le sens axial de l'arbre, ledit mandrin (124) pouvant être déplacé en translation vers l'avant par la commande de translation grâce à un autre vérin (76) entre une position d'appui de la face antérieure du mandrin contre les derniers plis du tube plissé (122) et une position de détente qui éloigne le mandrin de l'intérieur du tube plissé.

7. Appareil selon la revendication 6, caractérisé par le fait que le mandrin (124) présente une section polygonale, de préférence carrée.

8. Appareil selon la revendication 6, caractérisé par le fait que le mandrin est constitué par un cylindre comportant une surface extérieure cannelée, moletée ou rendue rugueuse.

9. Appareil selon l'une quelconque des revendications 6, 7 ou 8, caractérisé par le fait que le vérin (92) de commande de translation (92, 94, 90, 88) de l'arbre (86) est constitué par un cylindre à simple effet et que, pour assurer le rappel de l'arbre (86), il est prévu un ressort de rappel (102).

10. Appareil selon l'une quelconque des revendications 6 à 9, caractérisé par le fait que l'arbre (86) traverse une poulie d'entraînement (100) de façon à tourner solidairement avec cette poulie tout en étant libre de coulisser axialement dans celle-ci, cette poulie pouvant être entraînée en rotation par un moteur électrique à réducteur (118).

11. Appareil suivant la revendication 10, caractérisé par le fait que l'entraînement de la poulie (100) s'effectue par l'intermédiaire d'une courroie crantée (122).

12. Appareil selon l'une quelconque des revendications 6 à 11, caractérisé par le fait que le vérin (92) de la commande de translation agit sur l'arbre (86) par l'intermédiaire d'une butée axiale (90).

13. Appareil selon la revendication 12, caractérisé par le fait que la butée axiale (90) est constituée par un palier à roulement.

14. Appareil selon l'une quelconque des revendications 6 à 13, caractérisé par le fait que l'arbre (86) est pourvu d'un alésage axial qui reçoit à coulissement un poussoir (112) destiné à repousser ultérieurement la mèche torsadée (126) à l'intérieur de l'enveloppe tubulaire plissée (122).

15. Appareil selon la revendication 14, caractérisé par le fait que l'arbre (86) est pourvu d'une fente longitudinale (114) à travers laquelle le poussoir (112) est accouplé à un organe de commande (104, 106) pouvant coulisser sur l'arbre.

16. Appareil selon la revendication 15, caractérisé par le fait que l'organe de commande est constitué par un disque (104) qui présente un moyeu (106) en forme de douille, dont la translation est assurée par la tige de piston d'un troisième vérin (110) qui agit de façon excentrée sur cette douille contre la résistance d'un ressort de rappel (102) de la commande de translation, dans le sens axial de l'arbre (86).

17. Appareil selon l'une quelconque des revendications 6 à 16, caractérisé par le fait qu'il comporte un système de fixation non-pivotant (14) destiné à saisir l'enveloppe tubulaire plissée (122) par sa périphérie extérieure sur une partie importante de sa longueur.

18. Appareil selon la revendication 17, caractérisé par le fait que le système de fixation (14) comporte deux demi-coquilles (38) qui s'étendent longitudinalement et sont mobiles par rapport l'une à l'autre.

19. Appareil selon la revendication 18, caractérisé par le fait que les demi-coquilles (38) sont fixées sur des leviers (34, 36) pouvant pivoter en sens contraires sous la commande d'un vérin à double effet.

20. Appareil selon la revendication 19, caractérisé par le fait que les leviers (34, 36) sont montés sur des arbres respectifs (28, 30) disposés à proximité l'un de l'autre au-dessus des demi-coquilles (38).

21. Appareil selon l'une ou l'autre des revendications 19 ou 20, caractérisé par le fait que les leviers (34, 36), lorsqu'ils sont en position de fermeture des demi-coquilles (38), sont soumis à la sollicitation d'un ressort tendant à les ouvrir, position dans laquelle les demi-coquilles (38), quand le vérin (46) ne subit aucune pression de fermeture, peuvent se déplacer dans une faible mesure par rapport l'une à l'autre.

22. Appareil selon l'une quelconque des revendications 17 à 21, destiné à être utilisé conjointement à un dispositif de plissage pour plisser en accordéon des longueurs pré-établies de matière tubulaire souple, caractérisé par le fait que le système de fixation (14) peut pivoter ou coulisser entre une position de prise en charge où ce système se raccorde à l'extrémité d'éjection du dispositif de plissage et une position de torsion en alignement avec l'outil de torsion.

Fig. 1

0 025 479

Fig. 2

Fig. 3

Fig. 4

Fig. 5

0 025 479

Fig. 6

0 025 479

*Fig. 7*

Fig. 8